# EUROPEAN PATENT SPECIFICATION

(11) **EP 1 562 730 B1**
(45) Date of publication and mention of the grant of the patent: **30.01.2008**
(21) Application number: 03783413.2
(22) Date of filing: 10.11.2003
(51) Int. Cl.: B29C 47/02, B05D 1/00

(54) **METHOD AND DEVICE FOR APPLYING A THICK REACTIVE COATING ON A BODY ROTATING ABOUT AN AXIS**
VERFAHREN UND VORRICHTUNG ZUM AUFTRAGEN EINER BESCHICHTIGUNG AUF EINEN UM EINE ACHSE ROTIERENDEN KÖRPER
PROCEDE ET DISPOSITIF D'APPLICATION D'UNE EPAISSE COUCHE REACTIVE SUR UN CORPS TOURNANT SUR UN AXE

(30) Priority: 11.11.2002 US 291933
(43) Date of publication of application: 17.08.2005
(73) Proprietor: Chemtura Corporation, Middlebury, CT 06749 (US)
(72) Inventor: PETER, Thomas, H., Southbury, CT 06488 (US); GAJEWSKI, Vincent, J., Cheshire, CT 06410 (US); MALLON, Charles, C., Prospect, CT 06712 (US)
(74) Representative: Spott, Gottfried
(86) International application number: PCT/US2003/036275
(87) International publication number: WO 2004/043677

(56) References cited:
- CH-A- 687 742
- US-A- 5 358 673
- US-A- 5 601 881
- US-B1- 6 419 747
- RUPRECHT H D ET AL: "ROLL COVERING BY ROTATIONAL CASTING WITH FAST-REACTING PUR SYSTEMS" PROCEEDINGS OF THE POLYURETHANES WORLD CONGRESS. NICE, SEPT. 24 - 26, 1991, LANCASTER, TECHNOMIC, US, vol. _, 24 September 1991 (1991-09-24), pages 478-481, XP001120310 cited in the application
- SEGGERN VON E ET AL: "REAKTIV BESCHICHTEN ROTATIONSBESCHICHTEN VON WALZEN UND ROHREN MIT HOCHREAKTIVEN PUR-SYSTEMEN" KUNSTSTOFFE, CARL HANSER VERLAG. MUNCHEN, DE, vol. 89, no. 9, September 1999 (1999-09), pages 144-146,148, XP000958438 ISSN: 0023-5563

## Description

### BACKGROUND OF THE INVENTION

### 1. Technical Field

This invention relates generally to a rotational casting method and device for coating a substrate rotating about an axis, and resulting in a coated article. More particularly, this invention is directed to a rotational casting method and device capable of applying thick coatings by dividing the reactive stream being applied to a substrate into multiple streams and applying these streams to the substrate in a helical, overlapping manner.

### 2. Description of Related Art

Methods for coating various substrates are known, e.g., conventional casting technique, spray technique, etc. Presently, a rotational casting technique has been employed for coating polyurethane elastomer compositions onto rigid substrates. Several advantages are associated with this method over the other known coating methods. For example, the rotational casting method provides a shorter production time with no requirement for a mold compared to the conventional casting method while also using less materials compared to the spraying method where overspraying generally occurs.

Ruprecht et al., "Roll Covering by Rotational Casting with Fast-reacting PUR Systems", Polyurethanes World Congress 1991 (Sep. 24-26) pp. 478-481, describes rotational casting techniques useful for producing roll coverings using fast-reacting polyurethane elastomer systems. In these systems, the polyurethane reaction mixture is metered through a movable mixing head which travels at constant speed in the axial direction along the rotating roll core, a short distance above its surface. The polyurethane reaction mixture solidifies very quickly (in a matter of seconds), to produce a polyurethane coating with a thickness buildup of 4-5 mm. Additional layers of the polyurethane reaction mixture are applied until the desired thickness of polyurethane coating is achieved.

U.S. Patent No. 5,89-5,806 discloses a polyurethane composition containing dual thixotropic agents and U.S. Patent No. 5,895,609 discloses a rotational casting method for coating a cylindrical object employing the polyurethane composition of the '806 patent. By employing the polyurethane composition containing dual thixotropic agents, a thicker coating was achieved per each pass without any dripping or ridging. These polyurethane coating compositions have found wide commercial use on rigid substrates, e.g., metals, plastics and composites, in areas such as, for example, paper and steel mill rolls, industrial rolls and graphic art printing rolls.

Grimm et al. U.S. Patent No. 5,601,881 and European Patent 0636467 disclose the use of "sheet die" to allow even thicker coatings to be applied. The die is disposed parallel to the axis of rotation of the body at an angle alpha, whereby the rate of reaction of the reaction mixture and the relative movement are synchronized with the circumferential speed of the rotating body in such a way that the successive convolutions overlay in the form of scales and connect together seamlessly.

However, US 5,601,881 differs from the present invention in that this prior art discloses synchronizing of the rate of reaction of a reaction mixture and a relative movement between a rotating body and a sheet die with the circumferential speed of the rotating body. Moreover, the latter prior art does not disclose a die having an interior network of Y-shaped channels dividing an inlet stream of a polymeric reaction mixture from an inlet channel into plural outlet streams in plural outlet channels each having a diameter less than that of the inlet channel, whereby such outlet channels are substantially parallel to each other.

However, there are problems associated with the use of such a sheet die. One such problem that such a sheet die, which produces a film of material with length to width ratio of 10 to 300, has difficulty maintaining even flow rate across the outlet. Differences in flow can come from edge effects, because the edges of the die have more resistance to flow, or from channeling of flow in various areas. Channeling can come from partial plugging, or viscosity increase in one area of the die, resulting in the lower viscosity, fresher material taking the path of least resistance around this area.

As a result, when flow becomes less even, the production must eventually be stopped to allow for the cleaning of the die. This can be a serious problem, for example, when producing large rolls where the highest quality is demanded, such as in paper mill rolls. Also, starting and stopping the roll covering operation can result in a noticeable defect in the surface of the roll at the point that production was stopped, further resulting in the roll covering being scrapped.

Another problem with the sheet die operation is that the sheet itself can form a wave like pattern of movement after exiting the die, resulting in uneven application to the substrate. To avoid this, the nozzle must be very close to the roll, and at an angle that keeps the distance from the forming roll cover to an absolute minimum. However, by running the nozzle close to the forming cover presents other problems, because of the risk of touching the roll, either with the die itself, or with fully reacted material that may be hanging from the die, forming a stalactite-like protuberance. The formation of such stalactite of cured material is not uncommon in such coating operations.

It would therefore be desirable to provide a rotational casting method and device for producing thick layers as is possible with the prior art systems, but with wider processing windows, allowing for longer runs, lower scrap rates, and higher quality articles.

### SUMMARY OF THE INVENTION

In accordance with the present invention a method for coating a substrate in accordance with claim 1 is provided.

Further in accordance with the present invention, a device for coating a surface of a substrate in accordance with claim 10 is provided.

### BRIEF DESCRIPTION OF THE DRAWINGS

The above and other objects, features and advantages of the present invention will become more apparent from the following detailed description when taken in conjunction with the accompanying drawings in which:
FIG. 1 is a partially cut away sectional view of the die of the present invention;
FIG. 2 is a bottom view of the die;
FIG. 3 is a side view illustrating the application of a coating to a substrate using the die of the present invention; and,
FIG. 4 is a diagram of a system for controlling the coating process.

### DETAILED DESCRIPTION OF PREFERRED EMBODIMENTS

While the invention is described herein in conjunction with a polyurethane reaction mixture, any other curable polymeric reaction mixture is also within the scope of the invention. For example, other curable polymeric reaction mixtures for use herein include, but are not limited to, epoxies, polyureas and silicone-containing materials.

The new method and device is particularly well suited to coating of rolls, pipes, belts, die cutting devices and a variety of other cylindrical substrates. The substrates can be fabricated from metal, plastic, ceramic, glass, or any other suitable material. This includes substrates that have the same diameter across the length of the cylinder, as well as those that have differing diameters at various positions along the cylinder. It can also be used to make tubes or coat the inside of pipes. It is also well suited to the use of reinforcing fabric or cord during the production of the covering.

The new method and device work surprisingly well because they take excellent advantage of the rising viscosity profile of the polyurethane reaction mixture. When the material is first discharged from the die, the viscosity is low and the mixture flows well, i.e., a viscosity (Brookfield) ranging from about 100 centipoise ("cps") to about 5,000 cps. The flow at this low viscosity allows for only a relatively low thickness (such as the 4-5 mm disclosed in Ruprecht et al.) to be applied without dripping. In the present invention, it also allows for the divided and properly spaced streams to flow together easily and immediately over a relatively wide area of the substrate. Then, in subsequent revolutions of the substrate, the viscosity has already increased considerably, e.g., to a viscosity ranging from about 5,000 cps to about 500,000 cps, allowing for the overlapping of a second group of polyurethane streams, which again flow together easily and provide the desired seamless combination with the previous material.

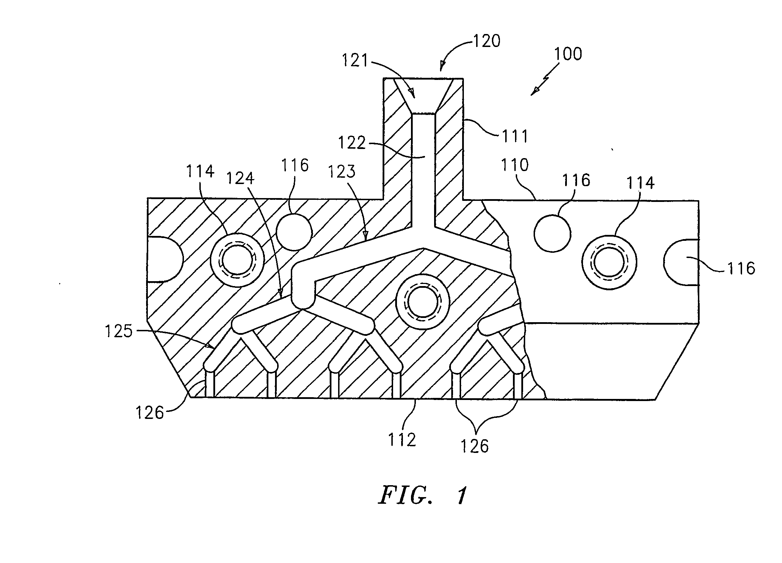

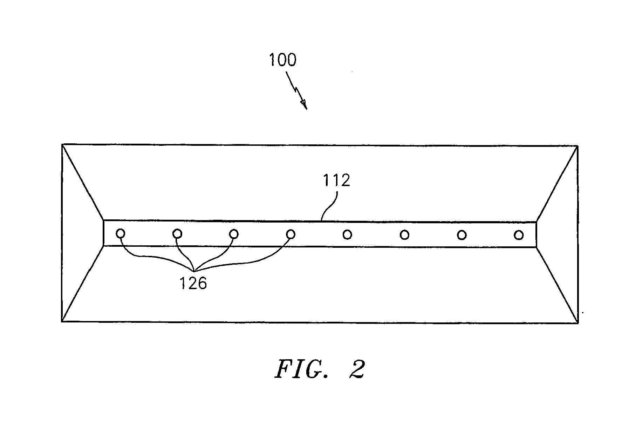

The method and device of the present invention will now be described with reference to FIGS. 1-4. Referring now to FIGS. 1 and 2, the die 100 of the present invention includes a body 110 having a proximal stem 111 and an elongated flat distal facing applicator surface 112. The body 110 may optionally have lateral tapped holes 114 to receive screw fasteners. For example, the die can be manufactured in two halves which are machined into the desired form, and thereafter joined to form the unitary die. Joining may optionally be achieved by screw fasteners, bolts, or any other suitable type of joining method in the art. Optional openings 116 are for location pins to facilitate positioning. The die includes an interior network 120 of branched channels to convey the reaction mixture from the proximal inlet 121 to the applicator surface 112.

The channel network 120 includes a linear inlet portion 122 which extends through stem 111 so that the polyurethane reaction mixture flows therethrough and into channel 123. The branches of Y-shaped channel 123 further divide into Y-shaped channels 124, which are smaller in diameter than the Y-shaped channels 123. Each of the Y-shaped channels 124 further divide into Y-shaped channels 125, which have a narrower diameter than Y-shaped channels 124. Each of the Y-shaped channels 125 lead to a respective one of the outlet channels 126, which are substantially parallel to each other and which communicate with the applicator surface 112. Outlet channels 126 are smaller in diameter than the Y-shaped channels 125. As can be seen, each branching doubles the number of channel portions to provide parallel outlet channels 126 oriented in a linear row.

Channel 123 is shown in FIG. 1 as having Y-shaped branches to convey the reaction mixture stream to the left and right. As one skilled in the art would readily appreciate, the streams are to be discharged in as short as possible a period of time which results in an increase in the pressure drop per channel portion. This feature tends to balance the flow rates among the reactive mixture streams in the die. Accordingly, the diameter of outlet channels 126 and linear inlet portion 122 should be chosen so that the reaction mixture streams can be balanced by flow. Additionally, flow rates should be selected so that the reaction mixture streams do not gel which results in plugging of outlet channels 126.

It is also important to divide the streams and discharge them in as short as possible a period of time, given the spacing desired between the reaction mixture streams. This helps to further ensure that buildup of cured material, eventually requiring the cleaning of the apparatus, is kept to a minimum.

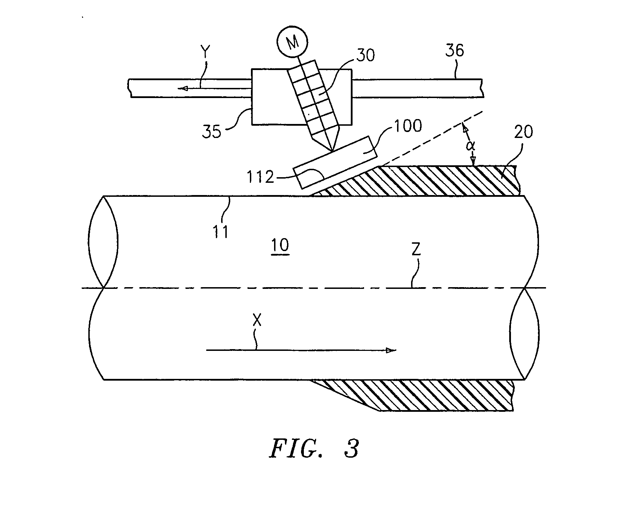

Referring now to FIG. 3, die 100 is connected to a metered mixing head 30 wherein the components of the polyurethane reaction mixture are mixed. The reaction mixture is then sent as a stream under pressure to the inlet 121 of the die for distribution through the channel network 120 of the die onto the applicator surface 112. From the applicator surface 112, the reaction mixture is applied as a fluid to surface 11 of the rotating cylindrical substrate 10 and thereafter cures to form a solid coating 20. The die and mixing head are attached to a mounting fixture 35 which is attached to member 36. The die 100 is positioned such that the applicator surface 112 is oriented at an angle α from the surface 11 of the substrate 10, wherein α preferably ranges from about 5° to about 40°, and most preferably from about 8° to about 25°.

The substrate 10 and/or the mounting fixture 35 are movable relative to each other to effect a linear translation of the die relative to substrate 10 in a direction parallel to the rotational axis Z of the substrate 10. In one embodiment, substrate 10 is mounted on rollers so as to be movable in a direction indicated by the arrow X. In another embodiment, member 36 can be a rail wherein the mounting fixture 35 is linearly slidable along member 36 in the direction indicated by arrow Y parallel to the axis Z of the substrate.

Relative linear movement between the die and the substrate is effected by moving the die and/or the substrate in a linear direction parallel to the axis Z of the substrate. Therefore, each turn of the substrate produces a helical convolution of the coating material which is slightly offset from, but in overlapping contact with, the previous convolution. In this manner, the coating can be advanced linearly along the surface of the substrate as the relative translational movement of the die progresses. The polyurethane reaction mixture is selected and mixed so as to have a reaction rate slow enough so that successive convolutions of applied coating material meld together seamlessly, but fast enough so that the coating hardens soon thereafter. The composition of the polyurethane reaction mixture and the mixing conditions are typically adjusted to provide a pouring time (i.e., the time the reactant mixture remains fluid after mixing) of from about 0.1 seconds to about 5 minutes and preferably from about 0.3 seconds to about 60 seconds.

Although FIG. 3 illustrates the application of a coating to an exterior surface of a cylindrical substrate, the substrate can also be coated on an inside surface. For example, wherein the substrate is a pipe having an axial bore, the method and apparatus of this invention can be employed to coat the inside surface of the pipe which defines the bore.

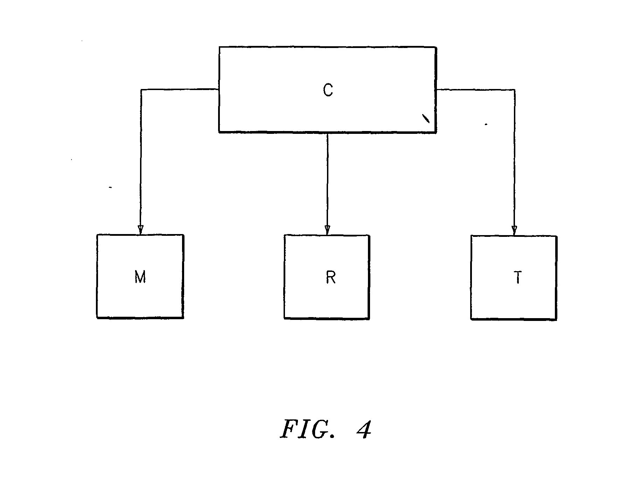

Referring to FIG. 4, a control system for the present method includes a controller C which controls the reaction mixture flow rate M, the rotational speed R of the substrate, and the relative translational speed of the die. These parameters of movement, M, R, and T, should be synchronized during operation of the coating process to provide optimal melding of the successive convolutions of the reaction mixture to provide a seamless, solid, continuous coating. By way of illustration, reaction mixture flow rate M typically ranges from about 0.5 to about 20 pounds/min and preferably from about 1 to about 10 pounds/min; the rotational speed R of the substrate typically ranges from about 2 to about 60 rpm and preferably from about 3 to about 30 rpm; and the relative translational speed of the die typically ranges from about 1 inches/min to about 60 inches/min and preferably from about 3 to 25 inches/min. These ranges are given for exemplification only, and parameters outside of these ranges may be employed whenever appropriate. Equipment for rotating the substrate, linearly moving the die and/or substrate, and pressurizing the reaction mixture to cause it to flow through the die, are all known in the art. Controller C can be a microprocessor controlled unit known in the art, e.g., those available from such sources as State Industries (Winnepeg, Canada), Max Machineries (Healdsburg, CA) and Edge Sweets Co. (Grand Rapids, MI).

The present invention has a number of advantages over the sheet die system of the prior art. First, since discrete, individual streams are being applied, each can be made to provide the same flow rate, and no streams will have any more or less of the "edge effects" noted with the sheet die. Secondly, since the divided streams do not have such high length to width ratios, the possibility for channeling is much reduced. If material begins to thicken in the die, the system will have the tendency to force it through rather than channel around it. This in turn gives rise to another important advantage - the ability to run for a longer period of time without shutdown.

One concern with the new system was that the individual streams might cause more air entrapment than the sheet die system. However, it was found that the small puddle created at the point of contact of each stream had just the opposite effect: it made it easier to run bubble free. This seemed to be largely because the small puddles stop air from getting too far into the nip area between the substrate and the material being applied.

Another advantage is that the individual streams are not influenced by the flow of the others, so the formation of wavy flow that occurs with the sheet die is absent. Also, there is much less need to keep the die very close to the forming cover, or to angle it to match the angle of application of the cover material. This allows for far more flexibility in operation.

By making the divided streams larger in diameter than the sheet die is in width (this is the normal case to achieve the same flow rate), the new system is also better suited to the use of fillers and fibers. Such additives to the system are less likely to cause plugging or channeling issues, and can thus be used at higher levels or at larger lengths and diameters.

The new system also has far greater flexibility of design, to suit the needs of the coating application. For example, the thickness of material applied can be adjusted differently at different points in the die, merely by changing the spacing of the individual streams. Thus, thicker coating can be applied at first, and thinner coatings at the end, or the thickness of coating can be increased as the roll thickness increases, thereby taking advantage of the larger diameter and faster reactivity against the hotter substrate. With the sheet die, this is not possible, since a die that is wider at one end than the other would immediately have a channeling problem that would cause material to solidify in the narrower portion in very short order.

The number of streams that the reaction mixture is divided into can vary widely, however, a practical limit is probably from about 2 to about 32, with about 3-16 being preferred. Having larger numbers of streams requires more sophisticated machining to balance the flow rates properly, and also requires the streams to be smaller, thereby resulting in higher pressures. However, these large numbers of streams also allow for distribution over the widest area, and allow for the thickest coatings to be made in the least amount of time. As few as two streams can be employed if the desired thickness is not too great, and if minimal pressure drop in the head is required.

An example of a die of this invention can be seen in FIG. 1, as described above. The stream is divided into eight individual streams spanning an application width of about 75 mm. The diameters of the individual streams is smallest near the output of each. These small output areas accept the largest pressure drop and thus are quite effective at balancing the flow rates among the streams. They are also used to direct the streams in parallel fashion, so that the material is deposited at proper spacing on the substrate regardless of the height of the die from the substrate.

As one skilled in the art can readily appreciate, further improvements in this die could be made by curving the runners and machining to smooth transitions at all intersections. This would allow for less chance of weak flow in corners, which can lead to buildup of cured material. However, machining of this die in the manner shown was easier, and further improvements along these lines have not been shown to be necessary at this time.

The following non-limiting examples are illustrative of the present invention:

### EXAMPLE

Commercially available "Ribbon Flow" materials were charged to the "A" and "B" tanks of a Spritztechnik meter-mix machine equipped for rotational casting. Adiprene RFA 1004 (an MDI polyester polyurethane prepolymer available from Crompton Corporation) was added to the "A" tank and heated to 52 C under nitrogen, and Adiprene RFB 4170 (an ester/amine based curative available from Crompton Corporation which provides the resulting polyurethane reaction mixture with a 70 Shore A Hardness) was added to the "B" tank and heated to 30 C under nitrogen. Both materials were then degassed by application of vacuum to the tank, followed by the addition of nitrogen to a pressure of about 20 psig. A roll core with a diameter of about 20 cm was put in place. The total flow rate of A+B used was about 2.0 Kg/min. The mixer was set to 6000 rpm and the traverse rate of the head was set to 3 mm per second.

The die shown in Figure 1 was tested first, under the conditions indicated above. The streams all flowed parallel and appeared to be all of the same flow rate. A high quality, bubble free roll cover was made under these conditions with a thickness of about 2.3 cm. Line pressure during the roll cover production was 42 bar.

For comparison purposes the experiment was repeated with a sheet die (e.g., the sheet die illustrated in U.S. Patent No. 5,601,881) where the dimensions of the sheet opening were 2 mm by 75 mm (commonly used). During this relatively short run, the sheet flowed relatively consistently, and distance to the roll was held to about 1-5 mm to avoid wavy flow. The result was a roll of equal thickness, but with some bubbles that we were unable to eliminate completely during the run by adjustments to the height or other adjustments. The sheet die was clearly more difficult to operate. Also, the pressures were higher, at 52 bar.

After these trails were completed, the dies were opened and inspected. The multiple stream die of the present invention was seen to have less build up, which was noted at the two ends of the sheet die which is outside the scope of the present invention.

Another advantage that was noticed was that the multiple stream die ran at lower pressure - about 42 bar as compared to 52 bar for the line pressure during the sheet die run. No pressure increase was noted during the course of the run. Because of this and the apparent lack of buildup, it is expected that this die would operate under these conditions for very long periods of time.

While the above description contains many specifics, these specifics should not be construed as limitations on the scope of the invention, but merely as exemplifications of preferred embodiments thereof. Those skilled in the art will envision many other possible variations that are defined by the claims appended hereto.

## Claims

1. A method for coating a substrate (10) comprising:
(a) rotating the substrate about an axis (Z) at a selected rotational speed,
(b) applying a polymeric reaction mixture to a surface (11) of the rotating substrate by ejecting the polymeric reaction mixture through a die (100) at a selected flow rate, said die dividing an inlet stream of the polymeric reaction mixture from an inlet channel through an interior network (120) of Y-shaped channels into plural outlet streams in plural outlet channels (126) each having a diameter less than that of the inlet channel, whereby such outlet channels are substantially parallel to each other, the outlet streams being applied to the substrate and the outlet streams being spaced apart from each other such that the outlet streams flow together seamlessly after application to the substrate,
(c) effecting relative linear movement between the rotating substrate and the die in a direction parallel to the axis of rotation at a selected relative linear speed, and,
(d) synchronizing the reaction mixture flow rate, the relative linear speed and the rotational speed in such a way that successive convolutions of the outlet streams of the polymeric reaction mixture overlap and meld together seamlessly.

2. The method of claim 1 where the polymeric reaction mixture has a pouring time of between about 0.3 seconds and about 60 seconds.

3. The method of claim 1 where the number of outlet streams that the polymeric reaction mixture is divided into ranges from 2 to about 32 streams.

4. The method of claim 1 wherein the polymeric reaction mixture is a polyurethane reaction mixture.

5. The method of claim 1 wherein the flow rate of the reaction mixture ranges from about 0.5 to about 20 pounds/minute.

6. The method of claim 1 wherein the rotational speed of the substrate ranges from about 2 rpm to about 60 rpm.

7. The method of claim 1 wherein the relative linear speed of the die ranges from about 2.54 cm/min (1 inches/minute) to about 152.4 cm/min (60 inches/minute).

8. The method of claim 1 wherein the polymeric reaction mixture is applied to an exterior surface of the substrate.

9. The method of claim 1 wherein the polymeric reaction mixture is applied to an interior surface of the substrate.

10. A device for coating a surface (11) of a substrate (10) consisting of:
(a) turning means for rotating the substrate about an axis (Z) at a selected rotational speed;
(b) mixing means for metered mixing and dispensing of a stream of a polymeric reaction mixture through a die (100) at a selected flow rate;
(c) a die having a applicator surface (112) and an internal network (120) of branched Y-channels for dividing the stream of polymeric reaction mixture of an inlet stream in an inlet channel into plural divided streams which are conveyed through respective plural outlet channels (126) to the applicator surface, said outlet channels each having a diameter less than that of the inlet channel, whereby such outlet channels are substantially parallel to each other;
(d) translation means for moving the die and/or the substrate relative to each other in a linear direction parallel to the axis of rotation of the substrate at a selected relative linear speed; and,
(e) a control system for synchronizing the rotational speed, the flow rate and the relative linear speed.

11. The device of claim 10 wherein the number of outlet channels (126) ranges from 2 to about 32.

12. The device of claim 10 wherein the die includes an inlet channel (122) for receiving the stream of polymeric reaction mixture from the mixing means, wherein the outlet channels (126) each have a diameter less than that of the inlet channel.

13. The device of claim 10 further comprising a mounting fixture to which the die and mixing means are attached, said mounting fixture maintaining the die in a position such that the applicator surface is oriented at an angle with respect to the surface of the substrate, said angle ranging from about 5° to about 40°.

14. The device of claim 13 wherein said angle ranges from about 8° to about 25°.

15. The device of claim 13 wherein the mounting fixture is slidably mounted to a rail and movable in a direction parallel to the axis of the substrate.

## Patentansprüche

1. Verfahren zum Beschichten eines Substrats (10), enthaltend:
a) Drehen des Substrats um eine Achse (Z) mit einer gewählten Drehgeschwindigkeit,
b) Aufbringen eines polymeren Reaktionsgemischs auf eine Oberfläche (11) des drehenden Substrats durch Ausspritzen des polymeren Reaktionsgemischs aus einem Spritzkopf (100) mit einer gewählten Strömungsrate, wobei der Spritzkopf einen Einlassstrom des polymeren Reaktionsgemischs aus einem Einlasskanal durch ein inneres Netzwerk (120) aus Y-förmigen Kanälen in mehrere Auslassströme in mehreren Auslasskanälen (126) unterteilt, die jeweils einen Durchmesser haben, der kleiner als der des Einlasskanals ist, wobei diese Auslasskanäle im Wesentlichen parallel zueinander sind und die Auslassströme auf das Substrat aufgebracht werden und diese einen solchen Abstand voneinander haben, dass die Auslassströme nach der Aufbringung auf dem Substrat nahtlos zusammenfließen,
c) Ausführen einer linearen Relativbewegung zwischen dem drehenden Substrat und dem Spritzkopf in einer Richtung parallel zur Drehachse mit einer gewählten linearen Relativgeschwindigkeit, und
d) Synchronisieren der Reaktionsgemisch-Strömungsrate, der linearen Relativgeschwindigkeit und der Drehgeschwindigkeit in einer solchen Weise, dass aufeinanderfolgende Windungen der Auslassströme des polymeren Reaktionsgemischs einander überlappen und sich nahtlos vereinen.

2. Verfahren nach Anspruch 1, bei dem das polymere Reaktionsgemisch eine Gießzeit zwischen etwa 0,3 s und etwa 60 s hat.

3. Verfahren nach Anspruch 1, bei dem die Anzahl der Auslassströme, in die das polymere Reaktionsgemisch unterteilt wird, im Bereich zwischen 2 und 32 liegt.

4. Verfahren nach Anspruch 1, bei dem das polymere Reaktionsgemisch ein Polyurethan-Reaktionsgemisch ist.

5. Verfahren nach Anspruch 1, bei dem die Strömungsrate des Reaktionsgemischs im Bereich von etwa 0,5 bis etwa 20 Pfund/min liegt.

6. Verfahren nach Anspruch 1, bei dem die Drehgeschwindigkeit des Substrats im Bereich zwischen 2 U/min und etwa 60 U/min liegt.

7. Verfahren nach Anspruch 1, bei dem die lineare Relativgeschwindigkeit des Spritzkopfs im Bereich von etwa 2,54 cm/min (1 Zoll/min) und etwa 152,4 cm/min (60 Zoll/min) liegt.

8. Verfahren nach Anspruch 1, bei dem das polymere Reaktionsgemisch auf eine Außenfläche des Substrats aufgebracht wird.

9. Verfahren nach Anspruch 1, bei dem das polymere Reaktionsgemisch auf eine Innenfläche des Substrats aufgebracht wird.

10. Vorrichtung zum Beschichten einer Oberfläche (11) eines Substrats (10), umfassend:
a) eine Dreheinrichtung zum Drehen des Substrats um eine Achse (Z) mit einer gewählten Drehgeschwindigkeit;
b) eine Mischeinrichtung zum abgemessenen Mischen und Abgeben eines Stroms eines polymeren Reaktionsgemischs durch einen Spritzkopf (100) mit einer gewählten Strömungsrate;
c) ein Spritzkopf, der eine Applikatorfläche (112) und ein inneres Netzwerk (120) aus verzweigten Y-förmigen Kanälen zum Unterteilen des Stroms aus polymerem Reaktionsgemisch von einem Einlassstrom in einen Auslasskanal in mehrere Teilströme aufweist, die durch mehrere entsprechende Auslasskanäle (126) zur Applikatorfläche geleitet werden, wobei die Auslasskanäle jeweils einen Durchmesser haben, der kleiner als der des Einlasskanals ist, wobei diese Auslasskanäle im Wesentlichen parallel zueinander sind;
d) eine Verstelleinrichtung zum Bewegen des Spritzkopfs und/oder des Substrats relativ zueinander in einer linearen Richtung parallel zur Drehachse des Substrats mit einer gewählten linearen Relativgeschwindigkeit; und
e) ein Steuersystem zum Synchronisieren der Drehgeschwindigkeit der Strömungsrate und der linearen Relativgeschwindigkeit.

11. Vorrichtung nach Anspruch 10, bei der die Anzahl der Auslasskanäle (126) im Bereich zwischen 2 und 32 liegt.

12. Vorrichtung nach Anspruch 10, bei der der Spritzkopf einen Einlasskanal (122) zum Entgegennehmen des Stroms polymeren Reaktionsgemischs von der Mischeinrichtung enthält und die Auslasskanäle (126) jeweils einen Durchmesser haben, der kleiner als der des Einlasskanals ist.

13. Vorrichtung nach Anspruch 10, weiterhin enthaltend eine Montagehalterung, an der der Spritzkopf und die Mischeinrichtung angebracht sind und die den Spritzkopf in einer solchen Position hält, dass die Applikatorfläche unter einem Winkel gegenüber der Oberfläche des Substrats angeordnet ist, der im Bereich zwischen etwa 5° und etwa 40° liegt.

14. Vorrichtung nach Anspruch 13, bei der der genannte Winkel im Bereich zwischen etwa 8° und etwa 25° liegt.

15. Vorrichtung nach Anspruch 13, bei der die Montagehalterung an einer Schiene verschiebbar angebracht und in einer Richtung parallel zur Achse des Substrats beweglich ist.

## Revendications

1. Procédé pour revêtir un substrat (10), lequel procédé comprend les étapes qui consistent à :
(a) faire tourner le substrat autour d'un axe (7) à une vitesse de rotation sélectionnée,
(b) appliquer un mélange polymère de réaction sur une surface (11) du substrat rotatif en éjectant le mélange polymère de réaction par une filière (100) à un débit sélectionné, ladite filière divisant un écoulement d'entrée du mélange polymère de réaction qui provient d'un canal d'entrée et qui traverse un réseau intérieur (120) de canaux en forme de Y en plusieurs écoulements de sortie dans plusieurs canaux de sortie (126), chacun ayant un diamètre inférieur au diamètre du canal d'entrée, ces canaux de sortie étant essentiellement parallèles les uns aux autres, les écoulements de sortie étant appliqué sur le substrat et les écoulements de sortie étant séparés les uns des autres de manière à ce que les écoulements de sortie s'écoulent ensemble de façon homogène après application sur le substrat,
(c) effectuer un mouvement linéaire relatif entre le substrat rotatif et la filière dans une direction parallèle à l'axe de rotation à une vitesse linéaire relative sélectionnée et
(d) synchroniser le débit du mélange de réaction, la vitesse linéaire relative et la vitesse de rotation de manière à ce que des convolutions successives des écoulements de sortie du mélange de réaction polymère se recouvrent et se mélangent ensemble de façon homogène.

2. Procédé selon la revendication 1, dans lequel le mélange de réaction polymère a un temps de coulée compris entre environ 0,3 seconde et environ 60 secondes.

3. Procédé selon la revendication 1, dans lequel le nombre d'écoulements de sortie en lesquels le mélange de réaction est divisé est compris dans la plage de 2 à environ 32 écoulements.

4. Procédé selon la revendication 1, dans lequel le mélange de réaction polymère est un mélange de réaction en polyuréthane.

5. Procédé selon la revendication 1, dans lequel le débit du mélange de réaction est compris entre environ 0,5 et environ 20 livres/minute.

6. Procédé selon la revendication 1, dans lequel la vitesse de rotation du substrat est comprise entre environ 2 tours/min et environ 60 tours/min.

7. Procédé selon la revendication 1, dans lequel la vitesse linéaire relative de la filière est comprise entre environ 2,4 cm/minute (1 pouce/min) et environ 152,4 cm/min (60 pouces/min).

8. Procédé selon la revendication 1, dans lequel le mélange de réaction polymère est appliqué sur une surface extérieure du substrat.

9. Procédé selon la revendication 1, dans lequel le mélange de réaction polymère est appliqué sur une surface intérieure du substrat.

10. Dispositif pour recouvrir une surface (11) d'un substrat (10), lequel dispositif comprend:
(a) un moyen de rotation pour faire tourner le substrat autour d'un axe (7) à une vitesse de rotation sélectionnée,
(b) un moyen de mélange qui dose et distribue à un débit sélectionné un écoulement d'un mélange polymère de réaction par une filière (100),
(c) une filière présentant une surface d'applicateur (112) et un réseau interne (120) de canaux ramifiés en forme de Y qui divise l'écoulement du mélange polymère de réaction d'un écoulement d'entrée dans un canal d'entrée en plusieurs écoulements divisés qui sont amenés par plusieurs canaux de sortie (126) respectifs à la surface de l'applicateur, lesdits canaux de sortie ayant chacun un diamètre inférieur à celui du canal d'entrée, ces canaux de sortie étant essentiellement parallèles les uns aux autres,
(d) un moyen de translation qui déplace la filière et/ou le substrat l'une par rapport à l'autre dans une direction linéaire parallèle à l'axe de rotation du substrat à une vitesse linéaire relative sélectionnée et
(e) un système de contrôle qui synchronise la vitesse de rotation, le débit et la vitesse linéaire relative.

11. Dispositif selon la revendication 10, dans lequel le nombre de canaux de sortie (126) est compris entre 2 et environ 32.

12. Dispositif selon la revendication 10, dans lequel la filière comprend un canal d'entrée (122) qui reçoit l'écoulement du mélange polymère de réaction provenant du moyen de mélange, dans lequel les canaux de sortie (126) présentent chacun un diamètre inférieur à celui du canal d'entrée.

13. Dispositif selon la revendication 10, qui comprend de plus une fixation de montage qui maintient la filière dans une position telle que la surface de l'applicateur est orientée obliquement par rapport à la surface du substrat, ledit angle étant compris entre environ 5 ° et environ 40 °.

14. Dispositif selon la revendication 13, dans lequel ledit angle est compris entre environ 8 ° et environ 25 °.

15. Dispositif selon la revendication 13, dans lequel la fixation de montage est montée de manière à ce qu'elle puisse glisser sur un rail et puisse être mobile dans une direction parallèle à l'axe du substrat.
